# FASCICULE DE BREVET EUROPEEN

(11) **EP 3 728 797 B1**
(45) Date de publication et mention de la délivrance du brevet: **01.02.2023**
(21) Numéro de dépôt: 18839842.4
(22) Date de dépôt: 20.12.2018
(51) Int. Cl.: F01D 21/00, F01D 25/12, F02K 3/06, F02C 7/18, B64D 29/00, F02C 7/14, F02K 3/075

(54) **ENSEMBLE PROPULSIF POUR AÉRONEF ET PROCÉDÉ DE VENTILATION D'UNE ENCEINTE MOTEUR**
FLUGZEUGANTRIEBSEINHEIT UND VERFAHREN ZUR BELÜFTUNG EINES MOTORGEHÄUSES
AIRCRAFT PROPULSION UNIT AND METHOD FOR VENTILATING AN ENGINE ENCLOSURE

(30) Priorité: 21.12.2017 FR 1762822
(43) Date de publication de la demande: 28.10.2020
(73) Titulaire: Safran Nacelles, 76700 Gonfreville-l'Orcher (FR)
(72) Inventeur: BOILEAU, Patrick, 76700 GONFREVILLE L'ORCHER (FR)
(74) Mandataire: Germain Maureau
(86) Numéro de dépôt international: PCT/FR2018/053477
(87) Numéro de publication internationale: WO 2019/122761

(56) Documents cités:
- EP-A1- 2 472 067
- WO-A2-2014/200587
- FR-A1- 2 896 276
- US-A- 5 269 135

## Description

La présente invention se rapporte à un ensemble propulsif pour aéronef et à un procédé de ventilation d'une enceinte moteur de l'ensemble propulsif de l'invention.

Un aéronef est mû par plusieurs ensembles propulsifs comprenant chacun un turboréacteur logé dans une nacelle.

Un ensemble propulsif comprend une nacelle, reliée par l'intermédiaire d'un pylône de suspension encore appelé mât réacteur, à l'aile de l'avion, et un turboréacteur par exemple du type double flux, apte à générer, par l'intermédiaire des aubes de la soufflante en rotation, un flux de gaz chauds (également dénommé flux primaire) et un flux d'air froid (également dénommé flux secondaire) qui circule à l'extérieur du turboréacteur à travers un passage annulaire, également appelé veine, formé entre deux parois concentriques de la nacelle. Les flux primaire et secondaire sont éjectés du turboréacteur par l'arrière de la nacelle.

La nacelle présente généralement une structure tubulaire comprenant une section amont, ou entrée d'air, située en amont du turboréacteur, une section médiane destinée à entourer la soufflante du turboréacteur, une section aval, destinée à entourer la chambre de combustion du turboréacteur (encore appelée zone « core » en anglais), pouvant embarquer des moyens d'inversion de poussée, et peut être terminée par une tuyère d'éjection située en aval du turboréacteur.

La section aval de la nacelle présente généralement une structure externe comportant un capot externe, qui définit, avec une structure interne fixe concentrique, la veine annulaire servant à canaliser le flux d'air froid. La structure interne fixe de la nacelle est généralement désignée par l'acronyme « IFS » pour « Inner Fixed Structure » en anglais.

Un passage annulaire, encore appelé enceinte moteur, est défini par l'espace annulaire compris entre la structure interne fixe de la nacelle et un carter moteur entourant la chambre de combustion du turboréacteur. Des matelas thermiques protègent généralement la structure interne fixe de la nacelle, exposée aux gaz chauds circulant dans le turboréacteur.

L'ensemble propulsif comporte plusieurs dispositifs de ventilation utilisés pour refroidir, lorsque l'ensemble propulsif est en fonctionnement, l'enceinte moteur. La ventilation de l'enceinte moteur peut être assurée par des évents de ventilation, généralement constitués par des écopes statiques ou dynamiques réparties sur la structure interne fixe de la nacelle. De plus, un échangeur de chaleur de type pré-refroidisseur (« precooler » en anglais) qui sert à réguler la température qui sort des prélèvements d'air destinés aux servitudes avion décharge son air quand le circuit est ouvert. Ce pré-refroidisseur fonctionne de la façon suivante : une écope prélève de l'air frais qui circule dans la veine annulaire, une vanne contrôle le débit d'air, l'air frais est aspiré par le pré-refroidisseur régulant la température de l'air envoyé vers l'avion et est recraché dans l'enceinte moteur, se mélangeant à la ventilation de l'enceinte moteur. L'ensemble de l'air chaud est éjecté de l'enceinte moteur par l'aval de l'ensemble propulsif.

Lorsque le turboréacteur passe d'un état de fonctionnement à un état arrêté, plus aucun système de ventilation ne fonctionne. Cela entraîne un accroissement de température, qui se produit d'une part à l'intérieur de la chambre de combustion du turboréacteur, et d'autre part dans l'enceinte moteur formée par l'espace annulaire compris entre la structure interne fixe de la nacelle et le carter moteur entourant la chambre de combustion du turboréacteur.

Cette augmentation de température est telle que le turboréacteur et l'enceinte moteur sont soumis à des températures supérieures aux températures en fonctionnement, l'ensemble propulsif n'étant plus ventilé.

Cette augmentation de température peut entraîner des phénomènes de « cokéfaction » ou des détériorations de structures ou de joints.

Afin d'éviter que de tels phénomènes ou détériorations ne se produisent, une première solution de l'art antérieur consiste à dimensionner les composants de la chambre de combustion du turboréacteur de façon à ce qu'ils soient compatibles des températures atteintes lors de l'arrêt du turboréacteur pendant 30 à 60 minutes.

Le coût de fabrication de tels composants surdimensionnés vis-à-vis de leur résistance thermique est trop élevé.

Une deuxième solution de l'art antérieur consiste à continuer la ventilation en laissant tourner le moteur à sec. Cette solution est très contraignante et se révèle trop coûteuse.

Une troisième solution de l'art antérieur est d'augmenter l'épaisseur des matelas thermiques qui recouvrent la structure interne fixe de la nacelle.

Cette solution n'est pas satisfaisante car elle entraîne une augmentation du coût et de la masse de la nacelle.

Le document FR2896276A1 présente un ensemble propulsif selon l'art antérieur.

La présente invention vise à résoudre les inconvénients ci-dessus, et ce rapporte pour ce faire à un ensemble propulsif pour aéronef, comportant :
- une nacelle,
- un turboréacteur,
- une veine annulaire de circulation d'un flux d'air secondaire, définie entre une structure externe de la nacelle et une structure interne fixe de la nacelle, et
- un dispositif pré-refroidisseur, communiquant avec une enceinte moteur définie par l'espace annulaire compris entre la structure interne fixe de la nacelle et un carter moteur entourant une chambre de combustion du turboréacteur, ledit dispositif pré-refroidisseur comportant une écope débouchant dans ladite veine annulaire et une vanne d'admission d'un flux d'air provenant de ladite veine annulaire,
ledit ensemble propulsif étant remarquable en ce qu'il comporte un circuit d'alimentation en air comprimé, agencé dans l'ensemble propulsif et conçu pour injecter un flux d'air comprimé dans ladite écope du dispositif pré-refroidisseur.

Ainsi, en prévoyant un ensemble propulsif comportant un circuit d'alimentation en air comprimé agencé dans l'ensemble propulsif et conçu pour injecter un flux d'air comprimé dans l'écope du dispositif pré-refroidisseur débouchant dans la veine annulaire de circulation du flux d'air secondaire, on crée un effet Venturi dans la veine annulaire.

Cela engendre une dépression en amont du dispositif pré-refroidisseur, dans la veine annulaire. Cette dépression entraîne une aspiration de l'air extérieur ambiant, entraînant un mouvement d'air dans le dispositif pré-refroidisseur, qui aspire alors l'air chaud de l'enceinte moteur.

On obtient ainsi un renouvellement d'air dans l'enceinte moteur, ce qui permet d'empêcher une augmentation de la température dans cette enceinte lorsque le turboréacteur est arrêté.

On s'affranchit alors de la nécessité de surdimensionner les composants de la chambre de combustion du turboréacteur afin qu'ils supportent des températures supérieures aux températures en fonctionnement, comme c'est le cas dans l'art antérieur. Il n'est par ailleurs plus nécessaire de laisser tourner le turboréacteur à sec pour permettre cette ventilation. Le coût de fabrication et de fonctionnement d'un tel ensemble propulsif est ainsi réduit par rapport à l'art antérieur.

Enfin, il est possible grâce à la présente invention de réduire par rapport à l'art antérieur l'épaisseur des matelas thermiques de protection de la structure interne fixe de la nacelle, ce qui permet de réduire encore le coût de l'ensemble propulsif, ainsi que sa masse.

Selon des caractéristiques optionnelles de l'ensemble propulsif de l'invention :
- le circuit d'alimentation en air comprimé comporte une rampe d'injection de jet, intégrée dans ladite écope et alimentée par une source pneumatique ;
- le dispositif pré-refroidisseur comporte une vanne d'admission en aval de l'écope, et le circuit d'alimentation en air comprimé comporte une rampe d'injection de jet, ladite rampe d'injection étant intégrée dans ladite vanne d'admission ou entre ladite écope et ladite vanne d'admission et étant alimentée par une source pneumatique ;
- la source pneumatique est intégrée à l'ensemble propulsif;
- la source pneumatique peut consister en un réservoir d'air comprimé intégré à l'ensemble propulsif;
- la source pneumatique peut consister en un compresseur embarqué dans l'ensemble propulsif;
- alternativement, la source pneumatique est extérieure à l'ensemble propulsif.

La présente invention concerne également un procédé de ventilation d'une enceinte moteur de l'ensemble propulsif selon l'invention, remarquable en ce qu'il comporte une étape d'injection d'air comprimé dans une écope du dispositif pré-refroidisseur lorsque le turboréacteur est à l'arrêt.

D'autres caractéristiques et avantages de l'invention apparaîtront à la lecture de la description détaillée qui suit pour la compréhension de laquelle on se reportera aux dessins annexés dans lesquels :
- la figure 1 illustre un turboréacteur d'un ensemble propulsif de l'invention ;
- la figure 2 est une vue en coupe longitudinale d'un ensemble propulsif de l'invention obtenu selon un premier mode de réalisation ;
- la figure 3 est une vue en coupe longitudinale d'un ensemble propulsif de l'invention obtenu selon un deuxième mode de réalisation ;
- la figure 4 est une vue en coupe selon la ligne IV-IV de la figure 2.

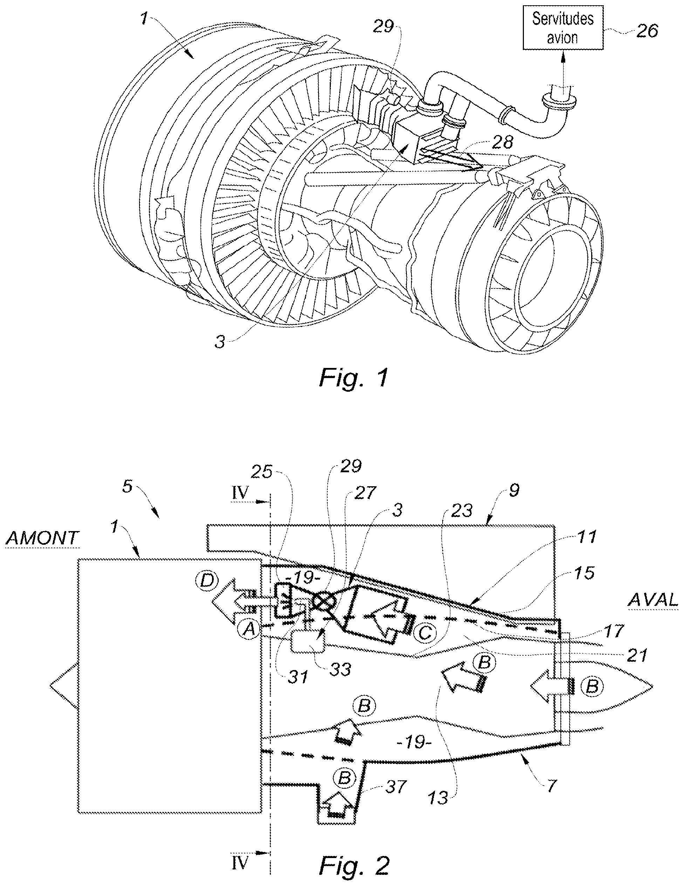

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 2.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

En outre, sur l'ensemble des figures, des références identiques ou analogues représentent des organes ou ensembles d'organes identiques ou analogues.

On se réfère à la figure 1, sur laquelle est représenté un turboréacteur 1 appartenant à l'ensemble propulsif de l'invention, et sur lequel est monté un dispositif pré-refroidisseur 3.

On se réfère à la figure 2, illustrant l'ensemble propulsif 5 de l'invention vue en coupe longitudinale, comportant une nacelle 7 entourant le turboréacteur 1 et reliée, par l'intermédiaire d'un pylône de suspension 9, à une aile (non représentée) de l'aéronef.

La nacelle 7 présente une section aval 11, destinée à entourer une chambre de combustion 13 du turboréacteur, présentant une structure externe 15 qui définit avec une structure interne fixe 17 concentrique, la veine annulaire 19 servant à canaliser le flux d'air secondaire d'air froid.

Une enceinte moteur 21 est définie par l'espace annulaire compris entre la structure interne fixe 17 et un carter moteur 23 entourant la chambre de combustion 13 du turboréacteur.

On revient à la figure 1. Le dispositif pré-refroidisseur 3 comporte une écope 25 débouchant dans la veine annulaire utilisée en fonctionnement classique du dispositif pré-refroidisseur pour prélever de l'air frais qui circule dans la veine annulaire, pour refroidir l'air de servitudes avion 26 prélevé sur un compresseur haute pression. Cet air de la veine annulaire est déchargé (flèche 28) dans l'enceinte moteur 21. A cet effet, le dispositif pré-refroidisseur 3 communique avec l'enceinte moteur 21.

Selon l'invention, l'ensemble propulsif 5 comporte un circuit d'alimentation 27 en air comprimé, visible à la figure 2 à laquelle on se réfère à nouveau.

Le circuit d'alimentation 27 en air comprimé est agencé dans l'ensemble propulsif pour injecter un flux d'air comprimé dans l'écope 25 du dispositif pré-refroidisseur 3.

Le dispositif pré-refroidisseur comporte une vanne 29 d'admission d'un flux d'air provenant de la veine annulaire. L'ensemble propulsif peut comporter un moyen d'actionnement automatisé de la vanne 29.

Le circuit d'alimentation 27 en air comprimé comporte une rampe d'injection 31 de jet, intégrée dans l'écope 25 du dispositif pré-refroidisseur 3 ou dans la vanne d'admission 29 ou entre l'écope 25 et la vanne d'admission 29.

La rampe d'injection 31 de jet est alimentée par une source pneumatique.

Selon une première réalisation de l'ensemble propulsif de l'invention, la source pneumatique est intégrée à l'ensemble propulsif 5. La source pneumatique consiste en un réservoir 33 d'air comprimé intégré à l'ensemble propulsif, qui peut être chargé depuis l'extérieur de l'ensemble propulsif via un tube d'alimentation connecté à un outillage appelé « Ground Support Equipment » en anglais, ou depuis l'intérieur de l'ensemble propulsif, par le compresseur haute pression du turboréacteur. La source pneumatique peut également consister en un compresseur embarqué sur l'ensemble propulsif.

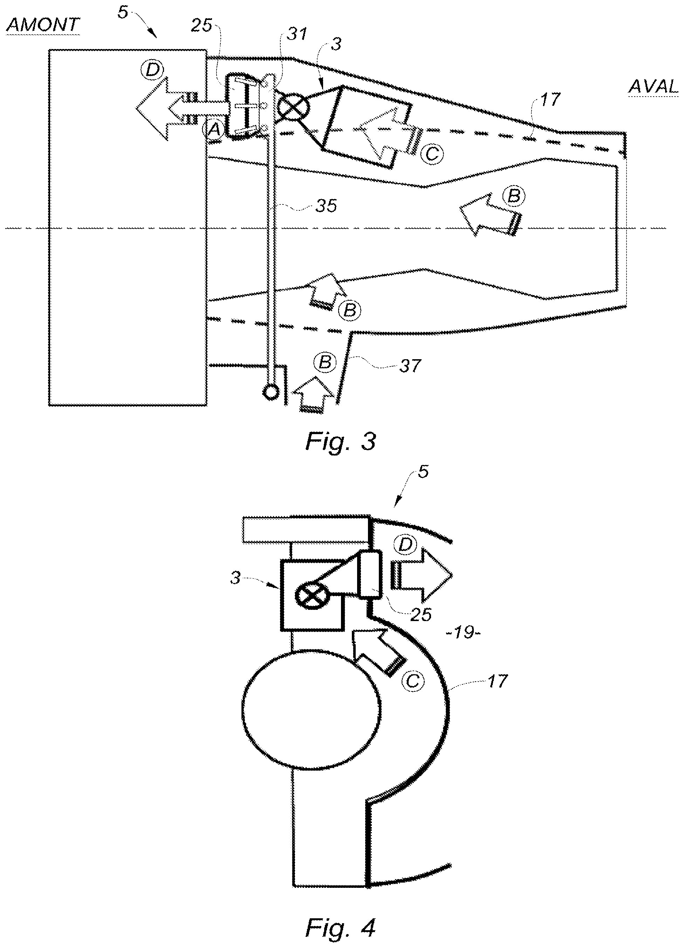

Selon une deuxième réalisation préférée de l'ensemble propulsif de l'invention, illustrée à la figure 3, la source pneumatique est extérieure à l'ensemble propulsif 5. La rampe d'injection 31 de jet demeure quant à elle intégrée dans l'écope 25 du dispositif pré-refroidisseur 3 et alimentée par la source pneumatique externe via un conduit 35. La source pneumatique extérieure est connectée à l'outillage moteur « Ground Support Equipment » ou à un circuit fixe d'air comprimé.

Le fonctionnement de la présente invention va à présent être décrit en référence aux figures 2 à 4.

Lorsque le turboréacteur est arrêté, on alimente le circuit d'alimentation 27 en air comprimé, par l'intermédiaire de la source pneumatique qui peut être intégrée à l'ensemble propulsif, ou externe à l'ensemble propulsif.

La rampe d'injection 31, reliée à la source pneumatique et intégrée dans l'écope du dispositif pré-refroidisseur, déverse un flux d'air comprimé dans la veine annulaire 19 (étape représentée par la flèche A aux figures 2 et 3). L'introduction du flux d'air comprimé dans la veine annulaire, au repos, crée un effet Venturi dans la veine annulaire. Cela engendre ainsi une dépression en amont du dispositif pré-refroidisseur 3, dans la veine annulaire 19.

Cette dépression entraîne une aspiration de l'air extérieur ambiant, par l'aval de l'ensemble propulsif ou par des évents de ventilation 37 pratiqués dans la structure interne fixe 17 de la nacelle, comme représenté aux figures 2 et 3 par les flèches B.

Cela entraîne un mouvement d'air dans le dispositif pré-refroidisseur, qui aspire alors l'air chaud de l'enceinte moteur 21, comme représenté aux figures 2 à 4 par la flèche C.

Le dispositif pré-refroidisseur rejette ensuite l'air chaud issu de l'enceinte moteur 21 par l'écope 25 du dispositif pré-refroidisseur 3, comme représenté par la flèche D aux figures 2 à 4.

On obtient ainsi un renouvellement d'air dans l'enceinte moteur, ce qui permet d'empêcher une augmentation de la température dans cette enceinte lorsque le turboréacteur est arrêté.

Ainsi, selon l'invention, le procédé de ventilation de l'enceinte moteur 21 de l'ensemble propulsif 5 comporte une étape d'injection d'air comprimé dans une écope du dispositif pré-refroidisseur lorsque le turboréacteur est à l'arrêt.

Le dispositif pré-refroidisseur 3 fonctionne alors en mode inversé lorsque le turboréacteur est arrêté, par rapport à un fonctionnement classique lorsque le turboréacteur est en fonctionnement.

## Revendications

1. Ensemble propulsif (5) pour aéronef, comportant :
- une nacelle (7),
- un turboréacteur (1),
- une veine annulaire (19) de circulation d'un flux d'air secondaire, définie entre une structure externe (15) de la nacelle (7) et une structure interne fixe (17) de la nacelle (7), et
- un dispositif pré-refroidisseur (3), communiquant avec une enceinte moteur (21) définie par l'espace annulaire compris entre la structure interne fixe (17) de la nacelle (7) et un carter moteur (23) entourant une chambre de combustion (13) du turboréacteur (1), ledit dispositif pré-refroidisseur (3) comportant une écope (25) débouchant dans ladite veine annulaire (19) et une vanne (29) d'admission d'un flux d'air provenant de ladite veine annulaire (19),
ledit ensemble propulsif (5) étant **caractérisé en ce qu'**il comporte un circuit d'alimentation (27) en air comprimé, agencé dans l'ensemble propulsif (5) et conçu pour injecter un flux d'air comprimé dans ladite écope (25) du dispositif pré-refroidisseur (3).

2. Ensemble propulsif (5) selon la revendication 1, **caractérisé en ce que** le circuit d'alimentation (27) en air comprimé comporte une rampe d'injection (31) de jet, intégrée dans ladite écope (25) et alimentée par une source pneumatique.

3. Ensemble propulsif (5) selon la revendication 1, dans lequel le dispositif pré-refroidisseur (3) comporte la vanne d'admission (29) en aval de l'écope (25), **caractérisé en ce que** le circuit d'alimentation (27) en air comprimé comporte une rampe d'injection (31) de jet, ladite rampe d'injection (31) étant intégrée dans ladite vanne d'admission (29) ou entre ladite écope (25) et ladite vanne d'admission (29) et étant alimentée par une source pneumatique.

4. Ensemble propulsif (5) selon la revendication 3, **caractérisé en ce que** la source pneumatique est intégrée à l'ensemble propulsif (5).

5. Ensemble propulsif (5) selon la revendication 4, **caractérisé en ce que** la source pneumatique consiste en un réservoir (33) d'air comprimé intégré à l'ensemble propulsif (5).

6. Ensemble propulsif (5) selon la revendication 4, **caractérisé en ce que** la source pneumatique consiste en un compresseur embarqué sur l'ensemble propulsif (5).

7. Ensemble propulsif (5) selon l'une des revendications 2 ou 3, **caractérisé en ce que** la source pneumatique est extérieure à l'ensemble propulsif (5).

8. Procédé de ventilation d'une enceinte moteur (21) d'un ensemble propulsif (5) défini selon l'une quelconque des revendications 1 à 7, **caractérisé en ce qu'**il comporte une étape d'injection d'air comprimé dans une écope (25) du dispositif pré-refroidisseur (3) lorsque le turboréacteur (1) est à l'arrêt.

## Patentansprüche

1. Antriebseinheit (5) für ein Flugzeug, Folgendes beinhaltend:
- eine Gondel (7),
- einen Turboreaktor (1),
- einen ringförmigen Kanal (19) zur Zirkulation eines Sekundärluftstroms, der zwischen einer externen Struktur (15) der Gondel (7) und einer festen internen Struktur (17) der Gondel (7) definiert ist, und
- eine Vorkühlvorrichtung (3), die mit einer Motoreinschließung (21) verbunden ist, die durch den Ringraum definiert ist, der zwischen der festen internen Struktur (17) der Gondel (7) und einem Motorgehäuse (23) enthalten ist, das eine Verbrennungskammer (13) des Turboreaktors (1) umgibt, wobei die Vorkühlvorrichtung (3) eine Schöpfschaufel (25), die in den ringförmigen Kanal (19) mündet, und ein Einlassventil (29) eines Luftstroms beinhaltet, der aus dem ringförmigen Kanal (19) stammt,
wobei die Antriebseinheit (5) **dadurch gekennzeichnet ist, dass** sie einen Druckluft-Versorgungskreislauf (27) beinhaltet, der in der Antriebseinheit (5) angeordnet ist, und gestaltet ist, um einen Druckluftstrom in die Schöpfschaufel (25) der Vorkühlvorrichtung (3) zu injizieren.

2. Antriebseinheit (5) nach Anspruch 1, **dadurch gekennzeichnet, dass** der Druckluft-Versorgungskreislauf (27) eine Strahl-Injektionsrampe (31) beinhaltet, die in der Schöpfschaufel (25) integriert ist, und durch eine Pneumatik-Quelle versorgt wird.

3. Antriebseinheit (5) nach Anspruch 1, wobei die Vorkühlvorrichtung (3) ein Einlassventil (29) stromabwärts der Schöpfschaufel (25) gelegen beinhaltet,
**dadurch gekennzeichnet, dass** der Druckluft-Versorgungskreislauf (27) eine Strahl-Injektionsrampe (31) beinhaltet, wobei die Injektionsrampe (31) in dem Einlassventil (29) oder zwischen der Schöpfschaufel (25) und dem Einlassventil (29) integriert ist, und durch eine Pneumatik-Quelle versorgt wird.

4. Antriebseinheit (5) nach Anspruch 3, **dadurch gekennzeichnet, dass** die Pneumatik-Quelle in der Antriebseinheit (5) integriert ist.

5. Antriebseinheit (5) nach Anspruch 4, **dadurch gekennzeichnet, dass** die Pneumatik-Quelle aus einem Druckluftbehälter (33) besteht, der in der Antriebseinheit (5) integriert ist.

6. Antriebseinheit (5) nach Anspruch 4, **dadurch gekennzeichnet, dass** die Pneumatik-Quelle aus einem Kompressor besteht, der in der Antriebseinheit (5) verbaut ist.

7. Antriebseinheit (5) nach einem der Ansprüche 2 oder 3, **dadurch gekennzeichnet, dass** die Pneumatik-Quelle außerhalb der Antriebseinheit (5) liegt.

8. Verfahren zur Lüftung einer Motoreinschließung (21) einer Antriebseinheit (5) nach einem der Ansprüche 1 bis 7, **dadurch gekennzeichnet, dass** es einen Schritt zum Injizieren von Druckluft in eine Schöpfschaufel (25) der Vorkühlvorrichtung (3) beinhaltet, wenn der Turboreaktor (1) angehalten ist.

## Claims

1. A propulsion unit (5) for an aircraft, comprising:
- a nacelle (7),
- a turbojet engine (1),
- an annular flow path (19) for circulating a secondary air flow, defined between an outer structure (15) of the nacelle (7) and an inner fixed structure (17) of the nacelle (7), and
- a precooler device (3), communicating with a motor enclosure (21) defined by the annular space comprised between the inner fixed structure (17) of the nacelle (7) and a motor casing (23) surrounding a combustion chamber (13) of the turbojet engine (1), said precooler device (3) comprising a scoop (25) opening into said annular flow path (19) and a valve (29) for the intake of an air flow from said annular flow path (19),
said propulsion unit (5) being **characterized in that** it comprises a compressed air supply circuit (27), arranged in the propulsion unit (5) and designed to inject a flow of compressed air into said scoop (25) of the precooler device (3).

2. The propulsion unit (5) according to claim 1, **characterized in that** the compressed air supply circuit (27) comprises a jet injection manifold (31), integrated into said scoop (25) and supplied by a pneumatic source.

3. The propulsion unit (5) according to claim 1, wherein the precooler device (3) comprises the intake valve (29) downstream of the scoop (25), **characterized in that** the compressed air supply circuit (27) comprises a jet injection manifold (31), said injection manifold (31) being integrated into said intake valve (29) or between said scoop (25) and said intake valve (29) and being supplied by a pneumatic source.

4. The propulsion unit (5) according to claim 3, **characterized in that** the pneumatic source is integrated with the propulsion unit (5).

5. The propulsion unit (5) according to claim 4, **characterized in that** the pneumatic source consists of a compressed air tank (33) integrated with the propulsion unit (5).

6. The propulsion unit (5) according to claim 4, **characterized in that** the pneumatic source consists of a compressor embedded on the propulsion unit (5).

7. The propulsion unit (5) according to any of claims 2 or 3, **characterized in that** the pneumatic source is external to the propulsion unit (5).

8. A method for ventilating a motor enclosure (21) of a propulsion unit (5) defined according to any one of claims 1 to 7, **characterized in that** it comprises a step of injecting compressed air into a scoop (25) of the precooler device (3) when the turbojet engine (1) is stopped.
